**Europäisches Patentamt**

**European Patent Office**

**Office européen des brevets**

(19)

(11) Veröffentlichungsnummer : **0 459 126 B1**

(12)

# EUROPÄISCHE PATENTSCHRIFT

(45) Veröffentlichungstag der Patentschrift :
**15.02.95 Patentblatt 95/07**

(51) Int. Cl.⁶ : **H05B 41/38, H05B 41/29**

(21) Anmeldenummer : **91106019.2**

(22) Anmeldetag : **16.04.91**

(54) **Verfahren und Einrichtung zum Starten einer Hochdruckgasentladungslampe in Kraftfahrzeugen.**

(30) Priorität : **14.05.90 DE 4015398**

(43) Veröffentlichungstag der Anmeldung :
**04.12.91 Patentblatt 91/49**

(45) Bekanntmachung des Hinweises auf die
Patenterteilung :
**15.02.95 Patentblatt 95/07**

(84) Benannte Vertragsstaaten :
**DE ES FR GB IT NL SE**

(56) Entgegenhaltungen :
**EP-A- 0 415 496**
**DE-A- 3 729 383**
**FR-A- 2 648 000**

(73) Patentinhaber : **Hella KG Hueck & Co.**
**Rixbecker Strasse 75**
**D-59552 Lippstadt (DE)**

(72) Erfinder : **Daub, Wolfgang**
**Im Winkel 4**
**W-4780 Lippstadt 11 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Starten einer Hochdruckgasentladungslampe in Kraftfahrzeugen, bei dem aus einer Gleichspannung eine Wechselspannung erzeugt, die Wechselspannung einer Zündeinrichtung zum Zünden der Hochdruckgasentladungslampe zugeführt wird, eine Lampenspannung und/oder ein Lampenstrom gemessen wird, der Istwert des Lampenstroms und/oder der Lampenspannung mit einem Sollwert verglichen wird und nach dem Zünden der Hochdruckgasentladungslampe für eine vorgegebene Zeitdauer eine Zusatzleistung zu der Betriebsleistung der Hochdruckgasentladungslampe mittels Veränderung der Wechselspannung zugeführt wird, die einerseits vom maximal zulässigen Lampenstrom begrenzt wird und andererseits nach Ablauf der vorgegebenen Zeitdauer abgebaut wird, und eine Einrichtung entsprechend dem Oberbegriff des Anspruchs 10.

Aus der deutschen Offenlegungsschrift DE-OS 37 29 383, betreffend eine Schaltungsanordnung zum Starten einer Hochdruckgasentladungslampe, ist ein Verfahren zum Starten einer Hochdruckgasentladungslampe bekannt, bei dem aus einer erzeugten Gleichspannung eine Wechselspannung gebildet wird und diese Wechselspannung zum Zünden einer Hochdruckgasentladungslampe einer Zündeinrichtung zugeführt wird. In dem Lampenkreis und in dem Wechselspannungserzeuger werden Spannungen gemessen, die als Istwerte mit Sollwerten verglichen werden und in Abhängigkeit derer die der Lampe zugeführte Leistung verändert wird. Damit die Lampe mit hoher Zuverlässigkeit einen stabilen Betriebszustand nach dem Zünden einnimmt, wird für eine vorgegebene, von dem Istwert der gemessenen Spannung abhängigen Zeitdauer der Hochdruckgasentladungslampe eine Zusatzleistung zu der Betriebsleistung mittels Veränderung der Wechselspannung zugeführt. Die Veränderung der Wechselspannung erfolgt dabei durch Erhöhung des Taststartverhältnisses bei und direkt nach dem Zünden der Hochdruckgasentladungslampe gegenüber dem Betriebstastverhältnis.

Als nachteilig erweist sich hierbei, daß der Hochdruckgasentladungslampe nach dem Zünden eine konstante Zusatzleistung zugeführt wird, wodurch die Hochdruckgasentladungslampe insbesondere bei einer nur kurzzeitigen Unterbrechung der Einschaltung nach dem Zünden eine zu hohe Lichtstärke abgeben kann, was zu einer Blendwirkung führen kann, die insbesondere in Kraftfahrzeugen zu gefährlichen Situationen führen kann.

Zudem erweist sich dabei als nachteilig, daß die Hochdruckgasentladungslampe entsprechend den unterschiedlichen vorliegenden Einschaltbedingungen mit unterschiedlichen Lichtstärken anläuft und somit kein möglichst schneller, gleichmäßiger, gleichbleibender Anstieg der Lichtstärke erreicht wird.

Die Schaltungsanordnung besteht dabei aus einer Gleichspannungsquelle, die an einen Wechselspannungserzeuger angeschlossen ist, einer Zündeinrichtung zwischen dem Wechselspannungserzeuger und der Hochdruckgasentladungslampe, mindestens einer Spannungsmeßeinrichtung in dem Lampenkreis und einem Vergleicher, der den Wechselspannungserzeuger ansteuert, um die Wechselspannung zu verändern.

Der Erfindung liegt die Aufgabe zugrunde, ein Verfahren und eine Einrichtung zum Starten von Hochdruckgasentladungslampen in Kraftfahrzeugen zu schaffen, das einfach und kostengünstig ist und das gewährleistet, daß die Hochdruckgasentladungslampe ihren optimalen Betriebszustand unabhängig von dem Einschaltzustand möglichst schnell und ohne Überschreiten der gewünschten Lichtleistung und damit ohne Blendwirkung bei einer möglichst gleichmäßigen monoton ansteigenden Lichtstärke erreicht.

Die Aufgabe wird bei dem erfindungsgemäßen Verfahren zum Zünden einer Hochdruckgasentladungslampe in Kraftfahrzeugen dadurch gelöst, daß ein Statuswert gebildet wird, der die Werte "Lampe ein" und "Lampe aus" annimmt, daß der Istwert ein Lampenleistungsistwert ist, daß der Sollwert ein Lampenleistungssollwert ist, daß die nach dem Zünden zu erzeugende Zusatzleistung mit zunehmender Ausschaltzeit und mit abnehmender Zeitdauer der letzten Einschaltzeit zunimmt und daß die Zeitdauer des Wirksamwerdens der Zusatzleistung mit zunehmender Ausschaltzeit und mit abnehmender Zeitdauer der letzten Einschaltzeit der Hochdruckgasentladungslampe zunimmt.

Es ist von Vorteil, daß ein Statuswert gebildet wird, der die Werte "Lampe ein" und "Lampe aus" annimmt, weil somit auf besonders einfache Weise ermittelt werden kann, ob die Lampe eingeschaltet oder ausgeschaltet ist und somit zum einen die Zeitdauer der letzten Einschaltzeit und zum anderen die Ausschaltzeit gemessen und ausgewertet werden kann.

Dadurch, daß der Istwert ein Lampenleistungsistwert ist und daß der Sollwert ein Lampenleistungssollwert ist, ergibt sich der Vorteil, daß die der Hochdruckgasentladungslampe zugeführte Leistung nach dem Zünden und bei dem Betrieb der Hochdruckgasentladungslampe mit großer Zuverlässigkeit und Genauigkeit geregelt werden kann.

Es ist von Vorteil, daß die nach dem Zünden zu erzeugende Zusatzleistung mit zunehmender Ausschaltzeit und mit abnehmender Zeitdauer der letzten Einschaltzeit zunimmt, wodurch erreicht wird, daß je nach dem Einschaltzustand der Hochdruckgasentladungslampe der Hochdruckgasentladungslampe exakt die Zusatzleistung zugeführt wird, die sicherstellt, daß die Hochdruckgasentladungslampe ihren optimalen Betriebszu-

EP 0 459 126 B1

stand möglichst schnell ohne Überschreiten der gewünschten Lichtleistung und damit ohne Blendwirkung bei einer möglichst gleichmäßigen, monoton ansteigenden Lichtstärke erreicht.

In diesem Zusammenhang erweist sich als besonders vorteilhaft, daß die Zeitdauer des Wirksamwerdens der Zusatzleistung mit zunehmender Ausschaltzeit und mit abnehmender Zeitdauer der letzten Einschaltzeit der Hochdruckgasentladungslampe zunimmt, weil somit der Hochdruckgasentladungslampe nur über eine solche Zeitdauer die Zusatzleistung zugeführt wird, die sicherstellt, daß die Hochdruckgasentladungslampe einen stabilen Betriebszustand erreicht hat, wodurch zum einen die Lebensdauer der Hochdruckgasentladungslampe erhöht wird und zum anderen die gewünschte Lichtstärke direkt nach dem Zünden der Hochdruckgasentladungslampe nicht überschritten wird.

Neben diesem besonders einfach und kostengünstig durchzuführenden Verfahren zum Starten einer Hochdruckgasentladungslampe erweist sich als vorteilhaft, daß die Statuswerte "Lampe ein" und "Lampe aus" in Abhängigkeit von vorgegebenen werten einer dem Lampenstrom entsprechenden Spannung gebildet werden, wodurch auf besonders einfache und sichere Weise die Statuswerte zur Messung der Ausschaltzeit und der Zeitdauer der letzten Einschaltzeit der Hochdruckgasentladungslampe gebildet werden.

Dadurch, daß der Lampenleistungsistwert durch Multiplikation der Lampenspannung mit einer dem Lampenstrom entsprechenden Spannung gebildet wird, ergibt sich der Vorteil einer besonders sicheren, einfachen und kostengünstigen Lampenleistungsistwertbildung.

Dadurch, daß eine maximale Zusatzleistung vorgegeben ist, ergibt sich der Vorteil, daß zum einen die Lebensdauer durch Schonung der Hochdruckgasentladungslampe verlängert wird und zum anderen vermieden wird, daß während der Zuführung der Zusatzleistung die Lichtstärke der Hochdruckgasentladungslampe einen gewünschten Wert übersteigt.

Aus den gleichen Gründen ist es vorteilhaft, daß eine maximale Zeitdauer des Wirksamwerdens der Zusatzleistung vorgegeben ist, zumal die maximale Zeitdauer derart gewählt wird, daß die Hochdruckgasentladungslampe innerhalb dieser maximalen Zeitdauer mit Sicherheit einen stabilen Betriebszustand erreicht hat.

Es ist von Vorteil, daß für die Zeitdauer des Wirksamwerdens der Zusatzleistung die Zusatzleistung einen annähernd konstanten Wert annimmt, weil somit sichergestellt wird, daß die Lichtstärke der Hochdruckgasentladungslampe einen gleichförmigen, monotonen Anstieg aufweist.

Dadurch, daß nach dem Ablauf der Zeitdauer des Wirksamwerdens die Zusatzleistung kontinuierlich abgebaut wird, ergibt sich der Vorteil, daß bei dem Abbau der Zusatzleistung die Lichtstärke der Hochdruckgasentladungslampe keine starken Schwankungen aufweist.

Dadurch, daß die Bildung des Leistungssollwert für die Zusatzleistung mittels digital oder analog abgespeicherter Kennlinienfelder erfolgt, erfolgt das Starten der Hochdruckgasentladungslampe mittels einer besonders einfachen und kostengünstigen Ausführungsform.

Es ist von Vorteil, daß die Bildung des Leistungssollwerts für die Zusatzleistung mittels durch RC-Glieder gebildete Exponentialfunktionen mit mindestens zwei unterschiedlichen Zeitkonstanten erfolgt, weil somit eine besonders einfache und kostengünstige Ausführungsform des Verfahrens gegeben ist.

Die Aufgabe wird durch die erfindungsgemäße Einrichtung nach Anspruch 10 derart gelöst, daß eine Leistungsistwertbestimmungseinrichtung zum einen mit einer Strommeßeinrichtung und einer Spannungsmeßeinrichtung und zum anderen mit dem Vergleicher verbunden ist, daß eine zeitgesteuerte Leistungssollwertbestimmungseinrichtung zum einen über eine Statusbestimmungseinrichtung mit der Strommeßeinrichtung und zum anderen mit dem Vergleicher verbunden ist und daß die Leistungssollwertbestimmungseinrichtung mindestens zwei Zeitglieder aufweist.

Es ist von Vorteil, daß eine Leistungsistwertbestimmungseinrichtung zum einen mit einer Strommeßeinrichtung und einer Spannungsmeßeinrichtung und zum anderen mit dem Vergleicher verbunden ist, weil sich somit eine besonders einfache und kostengünstige Meßanordnung zur Bestimmung eines Leistungsistwerts ergibt.

Vorteilhaft ist es, daß eine zeitgesteuerte Leistungssollwertbestimmungseinrichtung zum einen über eine Statusbestimmungseinrichtung mit der Strommeßeinrichtung und zum anderen mit dem Vergleicher verbunden ist, weil auf diese Weise zum einen besonders kostengünstig ein Leistungssollwert und eine Zusatzleistung zu der Betriebsleistung in Abhängigkeit von den Ausschaltzeiten und der Zeitdauer der letzten Einschaltzeiten der Hochdruckgasentladungslampe gebildet werden kann und zum anderen auf besonders einfache und kostengünstige Weise der Leistungsistwert mit dem Leistungssollwert verglichen werden kann und dem Wechselspannungserzeuger ein Signal zugeführt werden kann, in dessen Abhängigkeit die Wechselspannung zur Leistungsanhebung und Leistungsabsenkung verändert werden kann.

In diesem Zusammenhang ist es besonders vorteilhaft, daß die Leistungssollwertbestimmungseinrichtung mindestens zwei Zeitglieder aufweist, weil somit auf besonders einfache und kostengünstige Weise in Abhängigkeit von den Ausschaltzeiten und der Zeitdauer der letzten Einschaltzeiten nach dem Zünden der Hochdruckgasentladungslampe eine Zusatzleistung zugeführt werden kann, die sicherstellt, daß zum einen die Hochdruckgasentladungslampe einen stabilen Betriebszustand erreicht, und zum anderen gewährleistet, daß die Hochdruckgasentladungslampe ihren optimalen Betriebszustand unabhängig von unterschiedlichen Einschaltzuständen möglichst schnell und ohne überschreiten der gewünschten Lichtleistung und damit ohne Blendwirkung bei einer möglichst gleichmäßigen, monoton ansteigenden Lichtstärke erreicht.

Ein besonders einfacher und zuverlässiger Aufbau der Einrichtung ergibt sich, wenn ein erstes Zeitglied die Ausschaltzeit der Hochdruckgasentladungslampe mißt und ein zweites Zeitglied die Zeitdauer der letzten Einschaltzeit der Hochdruckgasentladungslampe mißt.

In diesem Zusammenhang ist besonders vorteilhaft, wenn die Leistungsbestimmungseinrichtung über ein Kennlinienfeld in Abhängigkeit von den gemessenen Ein- und Ausschaltzeiten einen Leistungssollwert unter Berücksichtigung des maximalen Lampenanlaufstroms bestimmt, weil somit mit hoher Sicherheit ein optimaler Betriebszustand der Hochdruckgasentladungslampe bei jeder Einschaltsituation erreicht wird und ein optimales Anlaufen gewährleistet wird.

Die Aufgabe wird durch die erfindungsgemäße Einrichtung nach Anspruch 14 dadurch gelöst, daß eine Leistungsistwertbestimmungseinrichtung zum einen mit einer Strommeßeinrichtung und einer Spannungsmeßeinrichtung und zum anderen mit dem Vergleicher verbunden ist, daß eine zeitgesteuerte Leistungssollwertbestimmungseinrichtung zum einen über eine Statusbestimmungseinrichtung mit der Strommeßeinrichtung und zum anderen mit dem Vergleicher verbunden ist, daß die Leistungssollwertbestimmungseinrichtung einen ersten Kondensator, beschaltet mit Sperrgliedern und/oder Widerständen, aufweist, der in Abhängigkeit von den Ausschaltzeiten und der Zeitdauer der letzten Einschaltzeiten der Hochdruckgasentladungslampe die Höhe der Zusatzleistung zur Betriebsleistung bestimmt und daß die Leistungssollwertbestimmungseinrichtung einen zweiten Kondensator beschaltet mit Sperrgliedern und/oder Widerständen aufweist, der in Abhängigkeit von den Ausschaltzeiten und der Zeitdauer der letzten Einschaltzeiten die Zeitdauer des Wirksamwerdens der Zusatzleistung zur Betriebsleistung bestimmt.

Es ist von Vorteil, daß eine Leistungsistwertbestimmungseinrichtung zum einen mit einer Strommeßeinrichtung und einer Spannungsmeßeinrichtung und zum anderen mit dem Vergleicher verbunden ist, daß eine zeitgesteuerte Leistungssollwertbestimmungseinrichtung zum einen über eine Statusbestimmungseinrichtung mit der Strommeßeinrichtung und zum anderen mit dem Vergleicher verbunden ist, weil auf diese Weise eine besonders einfache und kostengünstige Einrichtung geschaffen wird, die ein zuverlässiges Starten und Betreiben einer Hochdruckgasentladungslampe in Abhängigkeit von vorgegebenen Leistungssollwerten und gemessenen Leistungsistwerten gewährleistet.

In diesem Zusammenhang erweist sich als besonders vorteilhaft, daß die Leistungssollwertbestimmungseinrichtung einen ersten Kondensator, beschaltet mit Sperrgliedern und/oder Widerständen, aufweist, der in Abhängigkeit von den Ausschaltzeiten und der Zeitdauer der letzten Einschaltzeiten der Hochdruckgasentladungslampe die Höhe der Zusatzleistung zur Betriebsleistung bestimmt und daß die Leistungssollwertbestimmungseinrichtung einen zweiten Kondensator, beschaltet mit Sperrgliedern und/oder Widerständen, aufweist, der in Abhängigkeit von den Ausschaltzeiten und der Zeitdauer der letzten Einschaltzeiten die Zeitdauer des Wirksamwerdens der Zusatzleistung zur Betriebsleistung bestimmt, weil somit auf besonders einfache und kostengünstige Weise ein zuverlässiges Starten der Hochdruckgasentladungslampe erreicht wird und zudem der optimale Betriebszustand der Hochdruckgasentladungslampe unabhängig von dem Einschaltzustand möglichst schnell und ohne Überschreiten der gewünschten Lichtleistung und damit ohne Blendwirkung bei einer möglichst gleichmäßigen, monoton ansteigenden Lichtstärke erreicht wird.

Es ist vorteilhaft, daß der Spannungsverlauf am ersten Kondensator die Abnahmefunktion der Zusatzleistung nach dem Ablauf der Zeitdauer für das Wirksamwerden der Zusatzleistung bestimmt, weil somit Schwankungen der Lichtstärke bei dem Abbau der Zusatzleistung vermieden werden.

Dadurch, daß die Statusbestimmungseinrichtung mit dem Steuereingang einer Schalteinrichtung verbunden ist, deren Schaltstrecke entweder einen ersten Referenzspannungsanschluß oder Masse über einen ersten Widerstand mit dem nichtinvertierenden Eingang eines Komparators verbinden kann, daß der nichtinvertierende Eingang des Komparators zudem über den zweiten Kondensator mit Masse verbunden ist, daß der invertierende Eingang des Komparators mit einem zweiten Referenzspannungsanschluß verbunden ist, daß der Ausgang des Komparators einen Schalter ansteuert, dessen Schaltstrecke den ersten Referenspannungsanschluß zum einen über einen neunten Widerstand mit dem nichtinvertierenden Eingang eines idealen Spannungsfolgers und zum anderen über einen achten Widerstand mit Masse verbinden kann, daß der nichtinvertierende Eingang des Spannungsfolgers über einen ersten Kondensator mit Masse verbunden ist, daß der Ausgang des Spannungsfolgers zum einen mit dem invertierenden Eingang des Spannungsfolgers und zum anderen über einen vierzehnten Widerstand mit dem invertierenden Eingang eines Subtrahierers verbunden ist, daß der nichtinvertierende Eingang des Subtrahierers mit einem dritten Referenzspannungsanschluß verbunden ist, und daß der Ausgang des Subtrahierers zum einen über einen dreizehnten Widerstand mit dem invertierenden Eingang des Subtrahierers und zum anderen mit dem Ausgang verbunden ist, der an den Vergleicher angeschlossen ist, ergibt sich der Vorteil einer besonders einfachen und kostengünstigen, mit hoher Zuverlässigkeit arbeitenden Einrichtung.

Ausführungsbeispiele der Erfindung sind in den Zeichnungen dargestellt und werden im folgenden anhand der Zeichnungen näher beschrieben.

Gleiche oder gleichwirkende Bauelemente sind in allen Zeichnungen mit gleichen Bezugszeichen versehen.

Es zeigen

Figur 1 ein Blockschaltbild einer Einrichtung zum Starten einer Hochdruckgasentladungslampe,

Figur 2 ein Ausführungsbeispiel einer Schaltungsanordnung einer Leistungssollwertbestimmungseinrichtung,

Figur 3 ein Leistungsdiagramm.

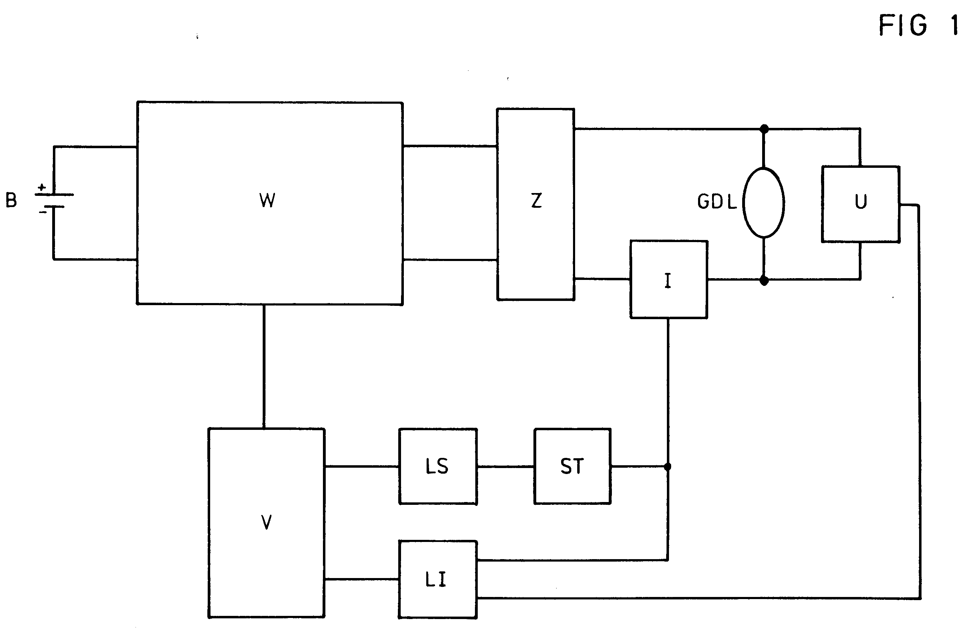

Figur 1 zeigt ein Blockschaltbild einer Einrichtung zum Starten einer Hochdruckgasentladungslampe (GDL). Eine Gleichspannungsquelle (B), die die Batterie eines Kraftfahrzeuges sein kann, ist elektrisch leitend mit einem Wechselspannungserzeuger (W) verbunden, der aus der Gleichspannung eine Wechselspannung erzeugt. Die erzeugte Wechselspannung kann zur Leistungsregelung in der Frequenz, der Impulsbreite und der Impulshöhe regelbar sein. Zum Zünden der Hochdruckgasentladungslampe (GDL) ist der Wechselspannungserzeuger (W) mit einer Zündeinrichtung (Z) verbunden, die die Hochdruckgasentladungslampe (GDL) mit einer Zündspannung versorgt und bei deren Betrieb eine Betriebsspannung zuführen kann.

Zur Bestimmung der der Hochdruckgasentladungslampe (GDL) zugeführten Leistung weist die Schaltung eine Leistungsistwertbestimmungseinrichtung (LI) auf, die zum einen mit einer Spannungsmeßeinrichtung (U), die parallel zu der Hochdruckgasentladungslampe (GDL) angeordnet ist, und zum anderen mit einer Strommeßeinrichtung (I), die in dem Lampenkreis angeordnet ist, verbunden. Die Spannungsmeßeinrichtung (U) erzeugt einen Spannungswert, der der Spannung in der Hochdruckgasentladungslampe (GDL) entspricht. Die Strommeßeinrichtung (I) erzeugt eine Spannung, die dem in dem Lampenkreis fließenden Strom entspricht. Die Leistungsistwertbestimmungseinrichtung (LI) kann dabei als ein Multiplizierer aufgebaut sein, der durch Multiplikation der Eingangssignale einen Leistungsistwert bildet, der als Spannungssignal einem Vergleicher (V) zugeführt wird, der elektrisch leitend mit dem Wechselspannungserzeuger (W) zur Leistungsregelung verbunden ist. Der Vergleicher (V) ist zudem mit einer Leistungssollwertbestimmungseinrichtung (LS) verbunden, die über eine Statusbestimmungseinrichtung (ST) mit der Strommeßeinrichtung (I) verbunden ist. Die Statusbestimmungseinrichtung (ST) erzeugt dabei einen Statuswert "Lampe ein", wenn in dem Lampenkreis ein vorgegebener Strom fließt. Die Statusbestimmungseinrichtung (ST) erzeugt einen Statuswert "Lampe aus", wenn in dem Lampenkreis ein vorgegebener Wert für den Strom unterschritten wird.

Der Vergleicher (V) vergleicht den Leistungssollwert mit dem Leistungsistwert und erzeugt ein Spannungssignal, das den Wechselspannungserzeuger (W) zur Veränderung der Wechselspannung im Sinne einer Leistungsänderung ansteuert.

Bei dem Betrieb der Hochdruckgasentladungslampe (GDL) ergibt sich durch eine solche Leistungsregelung der Vorteil, daß die Hochdruckgasentladungslampe (GDL) zum einen in der Leistung und damit der Helligkeit regelbar ist und zum anderen, daß die Hochdruckgasentladungslampe (GDL) unter optimalen Betriebsbedingungen betrieben werden kann.

Besonders bei dem Betrieb von Hochdruckgasentladungslampen (GDL) in Kraftfahrzeugen zur Ausleuchtung der Straße stellt sich die Forderung, daß die von der Hochdruckgasentladungslampe (GDL) abzugebende, gewünschte Lichtleistung möglichst schnell erreicht wird. Dazu kann der Hochdruckgasentladungslampe (GDL) in der Anlaufphase eine Zusatzleistung zu der normalen Betriebsleistung zugeführt werden.

Bei der erfindungsgemäßen Einrichtung wird dies dadurch erreicht, daß die Leistungssollwertbestimmungseinrichtung über ein Kennlinienfeld in Abhängigkeit von den gemessenen Ein- und Ausschaltzeiten einen Leistungssollwert unter Berücksichtigung des maximalen Lampenanlaufstroms bestimmt. Zudem kann bei einem solchen Ausführungsbeispiel ein erstes Zeitglied vorgesehen sein, das die Ausschaltzeiten der Hochdruckgasentladungslampe (GDL) mißt. Zudem kann ein zweites Zeitglied vorgesehen sein, das die Zeitdauer der letzten Einschaltzeiten der Hochdruckgasentladungslampe mißt. Die Zeitglieder können dabei durch die von der Statusbestimmungseinrichtung (ST) gebildeten Statuswerte "Lampe ein" "Lampe aus" angesteuert werden. Somit ist auf besonders einfache und kostengünstige Weise gewährleistet, daß die Hochdruckgasentladungslampe (GDL) zuverlässig startet und ihren optimalen Betriebszustand unabhängig von dem jeweiligen Einschaltzustand möglichst schnell ohne überschreiten der gewünschten Lichtleistung und damit ohne Blendwirkungen bei dem Betrieb in Kraftfahrzeugen bei einer möglichst gleichmäßigen, monoton ansteigenden Lichtstärke erreicht.

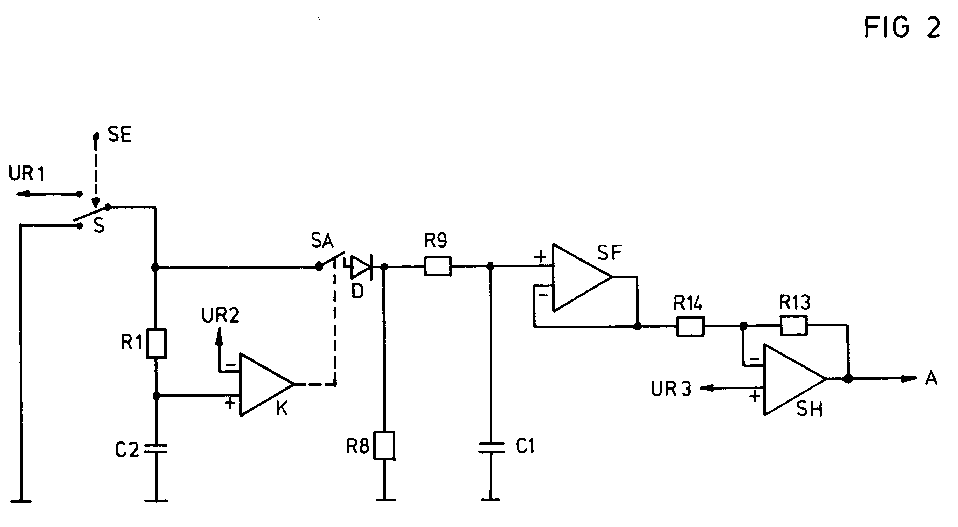

Figur 2 zeigt ein besonders einfaches und kostengünstiges Ausführungsbeispiel einer Schaltungsanordnung einer Leistungssollwertbestimmungseinrichtung (LS).

Bei der in Figur 2 dargestellten Schaltungsanordnung ist die Statusbestimmungseinrichtung (ST) mit dem Steuereingang (SE) einer Schalteinrichtung (S) verbunden, deren Schaltstrecke entweder einen erster Referenzspannungsanschluß (UR1) oder Masse über einen ersten Widerstand (R1) mit dem nichtinvertierenden Eingang eines Komparators (K) verbinden kann. Der nichtinvertierende Eingang des Komparators (K) ist zudem über einen zweiten Kondensator (C2) mit Masse verbunden. Der invertierende Eingang des Komparators (K) ist mit einem zweiten Referenzspannungsanschluß (UR2) verbunden. Der Ausgang des Komparators (K) ist hier beispielhaft mit einem Schalter (SA) verbunden, dessen Schaltstrecke den ersten Referenzspannungsanschluß (UR1) über ein Sperrglied (D) zum einen über einen neunten Widerstand (R9) mit dem nichtinvertierenden Eingang eines idealen Spannungsfolgers (SF) und zum anderen über einen achten Widerstand (R8) mit Masse verbinden kann. Der nichtinvertierende Eingang des Spannungsfolgers (SF) ist über einen ersten Kondensator (C1) mit Masse verbunden.

Der Ausgang des Spannungsfolgers (SF) ist zum einen mit dem invertierenden Eingang des Spannungsfolgers (SF) und zum anderen über einen vierzehnten Widerstand (R14) mit dem invertierenden Eingang eines Subtrahierers (SH) verbunden. Der nichtinvertierende Eingang des Subtrahierers (SH) ist mit einem dritten Referenzspannungsanschluß (UR3) verbunden. Der Ausgang des Subtrahierers (SH) ist zum einen über einen dreizehnten Widerstand (R13) mit dem invertierenden Eingang des Subtrahierers (SH) und zum anderen mit dem Ausgang (A) verbunden, der an den Vergleicher (V) angeschlossen ist.

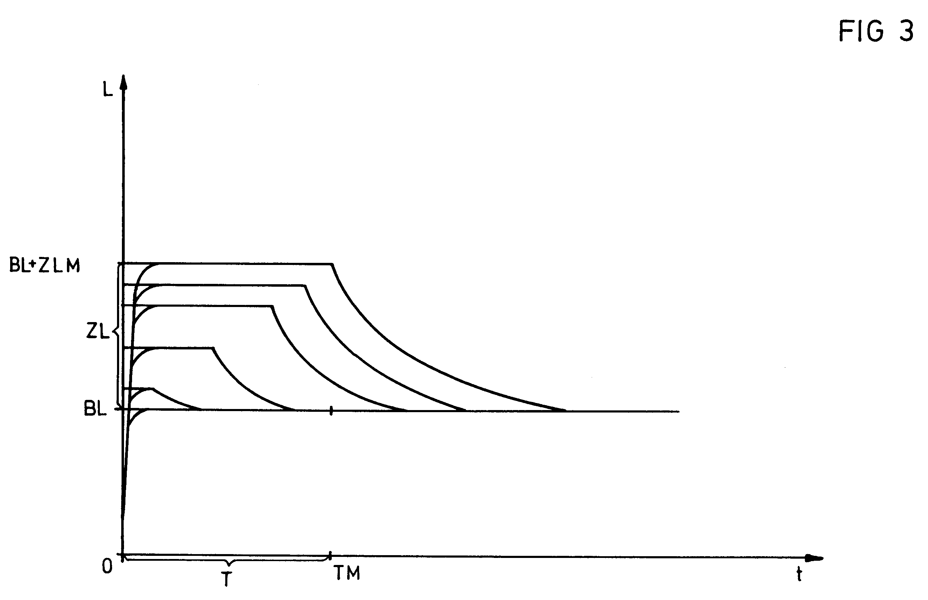

Anhand des in Figur 3 gezeigten Leistungsdiagramms werden im folgenden das Verfahren und die Ausführungsformen der Einrichtung näher beschrieben.

Figur 3 zeigt ein Diagramm, wobei die Abszisse eine Zeitachse ist, die mit (t) bezeichnet ist, und die Ordinate eine Leistung (L) angibt. Für die Hochdruckgasentladungslampe (GDL) ist für deren optimalen Betrieb eine Betriebsleistung (BL) erforderlich, die einen konstanten oder variablen Leistungswert annimmt. Nach dem Zünden der Hochdruckgasentladungslampe (GDL) wird dieser, um ein schnelles und sicheres Starten sicherzustellen, eine Zusatzleistung (ZL) zusätzlich zu der Betriebsleistung (BL) zur Verfügung gestellt. Die Höhe der Zusatzleistung (ZL) variiert dabei zwischen Null und einer maximalen Zusatzleistung (ZLM) in Abhängigkeit von den Ausschaltzeiten und der Zeitdauer der letzten Einschaltzeiten der Hochdruckgasentladungslampe (GDL). Die Zeitdauer (T) des Wirksamwerdens der Zusatzleistung (ZL) variiert in Abhängigkeit von den Ausschaltzeiten und der Zeitdauer der letzten Einschaltzeiten der Hochdruckgasentladungslampe (GDL) zwischen dem Wert 0 und einer maximalen Zeitdauer (TM). über die Zeitdauer (T) des Wirksamwerdens der Zusatzleistung (ZL) nimmt die Zusatzleistung (ZL) hier beispielhaft einen konstanten Wert ein. Aufgrund des maximal zulässigen Anlaufstroms ist die Lampenleistung unmittelbar nach dem Zünden zusätzlich begrenzt, wie in Figur 3 beispielhaft gezeigt. Die Zusatzleistung (ZL) wird hier nach dem Ablauf der Zeitdauer (T) beispielhaft, um zu vermeiden, daß Helligkeitsschwankungen der Hochdruckgasentladungslampe (GDL) auftreten, kontinuierlich bis zur Betriebsleistung (BL) abgebaut. Es ergibt sich somit eine Kurvenschar, die ein Kennlinienfeld darstellt, das von den Ausschaltzeiten und der Zeitdauer der letzten Einschaltzeiten der Hochdruckgasentladungslampe (GDL) abhängt. Diese Kurven können gemessen oder berechnet werden. Die zu erzeugende Zusatzleistung (ZL) nimmt dabei mit zunehmender Ausschaltzeit und mit abnehmender Zeitdauer der letzten Einschaltzeit zu, und die Zeitdauer (T) des Wirksamwerdens der Zusatzleistung (ZL) nimmt mit zunehmender Ausschaltzeit und mit abnehmender Zeitdauer der letzten Einschaltzeit der Hochdruckgasentladungslampe (GDL) zu.

Ein solches Kennlinienfeld kann, wie unter Figur 1 beschrieben, in der Leistungssollwertbestimmungseinrichtung (LS) in einem Kennfeldspeicher abgespeichert sein. Die Leistungssollwertbestimmungseinrichtung (LS) kann dabei über ein erstes Zeitglied verfügen, das in Abhängigkeit von den Statuswerten von der Statusbestimmungseinrichtung (ST) die Ausschaltzeit der Hochdruckgasentladungslampe (GDL) nach dem letzten Außerbetriebsetzen bis zum erneuten Starten mißt. Ein zweites Zeitglied kann in Abhängigkeit von den Statuswerten der Statusbestimmungseinrichtung (ST) die Zeitdauer der letzten Einschaltzeit der Hochdruckgasentladungslampe (GDL) messen. In Abhängigkeit der Signale von dem ersten und dem zweiten Zeitglied wird dann die Zusatzleistung (ZL) entsprechend dem abgelegten Kennlinienfeld durch den Wechselspannungserzeuger (W) erzeugt.

War die Hochdruckgasentladungslampe (GDL) lange außer Betrieb und somit in einem kalten Betriebszustand, so wird die maximale Zusatzleistung (ZLM) der Hochdruckgasentladungslampe (GDL) zugeführt. In dem anderen Extremfall, bei dem der Betrieb der Hochdruckgasentladungslampe (GDL) nur kurzzeitig unterbrochen war und die Zeitdauer des letzten Einschaltens sehr lang war, wird der Hochdruckgasentladungslampe (GDL) bei dem erneuten Zünden nur die Betriebsleistung (BL) zugeführt. Der Verlauf der in Figur 3 gezeigten Kurven ist nur beispielhaft anzusehen, insbesondere kann bei anderen Ausführungsformen der konstante Verlauf der Zusatzleistung (ZL) über die Zeitdauer (T) des Wirksamwerdens der Zusatzleistung (ZL) einen den Betriebsbedingungen der Hochdruckgasentladungslampe (GDL) angepaßten Verlauf annehmen.

Die Wirkungsweise der Schaltungsanordnung unter Figur 2 wird im folgenden detailliert beschrieben.

Die Hochdruckgasentladungslampe wird zu einer Zeit (t=0) in Betrieb genommen und die erste Referenzspannung (UR1) ist über die Schalteinrichtung (S) mit der Leistungssollwertbestimmungseinrichtung verbunden. Zu diesem Zeitpunkt (t=0) sind die Kondensatoren spannungslos und die erste Referenzspannung (UR1), die zweite Referenzspannung (UR2) und die dritte Referenzspannung (UR3) erreichen ihren Nennwert. Die Sollspannung (US) an dem Ausgang (A) des Subtrahierers (SH) entspricht in diesem Augenblick dem maximalen Leistungssollwert und beträgt:

$$US = UR3 \cdot (1 + R13/R14).$$

US = Spannungssollwert
UR3 = Dritter Referenzspannungswert
R13 = Widerstandswert des dreizehnten Widerstands (R13)
R14 = Widerstandswert des vierzehnten Widerstands (R14)

Der zweite Kondensator (C2) lädt sich über den ersten Widerstand (R1) mit der ersten Zeitkonstante (T1=R1 · C1) auf. Erreicht die Spannung des zweiten Kondensators (C2) den Wert der zweiten Referenzspannung (UR2), so schaltet der Komparator (K) den Schalter (SA) ein und der erste Kondensator (C1) wird über den neunten Widerstand (R9) über das Sperrglied (D) über den ersten Referenzspannungsanschluß (UR1) mit der zweiten Zeitkonstante (T2=R9 · C1) aufgeladen. Die Sollspannung (US) reduziert sich somit zu

$$US(t) = UR3 \cdot (1 + R13/R14) - UC1(t) \cdot R13/R14.$$

(UC1(t)) gibt dabei die zeitliche Änderung der Spannung an dem ersten Kondensator (C1) an. (US(t)) beschreibt die zeitliche Änderung der Sollspannung (US), die dem Leistungssollwert entspricht. Ist der erste Kondensator (C1) auf den Spannungswert der ersten Referenzspannung (UR1) aufgeladen, so entspricht der Leistungssssollwert, das heißt der Spannungssollwert (US) der Betriebsleistung (BL):

$$US = UR3 \cdot (1 + R13/R14) - UR1 \cdot R13/R14.$$

Wird die Hochdruckgasentladungslampe (GDL) zu einem Zeitpunkt (t1>0) abgeschaltet, so wird die Schalteinrichtung (S) gegen Masse geschaltet und der zweite Kondensator (C2) entlädt sich mit der ersten Zeitkonstanten (T1) über den ersten Widerstand (R1). Der erste Kondensator (C1) entlädt sich über den achten Widerstand (R8) und den neunten Widerstand (R9) mit der dritten Zeitkonstanten (T3), wobei (T3) durch (T3=(R8+R9)·C1) gegeben ist.

Wird die Hochdruckgasentladungslampe (GDL) zu einer Zeit (t2>t1) wieder eingeschaltet, so wird der oben beschriebene Ablauf von den Restspannungen des ersten Kondensators (C1) und des zweiten Kondensators (C2) beeinflußt. So bestimmt die Restspannung des ersten Kondensators (C1) die Größe der Zusatzleistung (ZL) und die Restspannung in dem zweiten Kondensator (C2) die Dauer des Wirksamwerdens der Zusatzleistung (ZL).

**Patentansprüche**

1. Verfahren zum Starten einer Hochdruckgasentladungslampe (GDL) in Kraftfahrzeugen, bei dem aus einer Gleichspannung eine Wechselspannung erzeugt wird, die Wechselspannung einer Zündeinrichtung (Z) zum Zünden einer Hochdruckgasentladungslampe (GDL) zugeführt wird, eine Lampenspannung und/oder ein Lampenstrom gemessen wird, der Istwert des Lampenstroms (I) und/oder der Lampenspannung (U) mit einem Sollwert verglichen wird und nach dem Zünden der Hochdruckgasentladungslampe (GDL) für eine vorgegebene Zeitdauer eine Zusatzleistung (ZL) zu der Betriebsleistung der Hochdruckgasentladungslampe (GDL) mittels Veränderung der Wechselspannung zugeführt wird, die einerseits vom maximal zulässigen Lampenstrom begrenzt wird und andererseits nach Ablauf der vorgegebenen Zeitdauer abgebaut wird, dadurch gekennzeichnet, daß ein Statuswert gebildet wird, der die Werte "Lampe ein" und "Lampe aus" annimmt, daß der Istwert ein Lampenleistungsistwert ist, daß der Sollwert ein Lampenleistungssollwert ist, daß die nach dem Zünden zu erzeugende Zusatzleistung (ZL) mit zunehmender Ausschaltzeit und mit abnehmender Zeitdauer der letzten Einschaltzeit zunimmt und daß die Zeitdauer (T) des Wirksamwerdens der Zusatzleistung (ZL) mit zunehmender Ausschaltzeit und mit abnehmender Zeitdauer der letzten Einschaltzeit der Hochdruckgasentladungslampe zunimmt.

2. Verfahren nach Anspruch 1, dadurch gekennzeichnet, daß die Statuswerte "Lampe ein" und "Lampe aus" in Abhängigkeit von vorgegebenen Werten einer dem Lampenstrom entsprechenden Spannung gebildet werden.

3. Verfahren nach Anspruch 2, dadurch gekennzeichnet, daß der Lampenleistungsistwert durch Multiplikation der Lampenspannung mit einer dem Lampenstrom entsprechenden Spannung gebildet wird.

4. Verfahren nach Anspruch 3, dadurch gekennzeichnet, daß eine maximale Zusatzleistung (ZLM) vorgegeben ist.

5. Verfahren nach Anspruch 4, dadurch gekennzeichnet, daß eine maximale Zeitdauer (TM) des Wirksamwerdens der Zusatzleistung (ZL) vorgegeben ist.

6. Verfahren nach Anspruch 5, dadurch gekennzeichnet, daß über die Zeitdauer (T) des Wirksamwerdens der Zusatzleistung (ZL) die Zusatzleistung (ZL) einen annähernd konstanten Wert annimmt.

7. Verfahren nach Anspruch 6, dadurch gekennzeichnet, daß nach dem Ablauf der Zeitdauer (T) des Wirksamwerdens der Zusatzleistung (ZL) die Zusatzleistung kontinuierlich abgebaut wird.

8. Verfahren nach Anspruch 7, dadurch gekennzeichnet, daß die Bildung des Leistungssollwerts für die Zusatzleistung (ZL) mittels digital oder analog abgespeicherter Kennlinienfelder erfolgt.

9. Verfahren nach Anspruch 7, dadurch gekennzeichnet, daß die Bildung des Leistungssollwerts für die Zusatzleistung (ZL) mittels durch RC-Glieder gebildete Exponentialfunktionen mit mindestens zwei unterschiedlichen Zeitkonstanten erfolgt.

10. Einrichtung zum Starten einer Hochdruckgasentladungslampe (GDL) in Kraftfahrzeugen mit einer Gleichspannungsquelle, die an einen Wechselspannungserzeuger (W) angeschlossen ist, mit einer Zündeinrichtung (Z) zwischen dem Wechselspannungserzeuger (W) und der Hochdruckgasentladungslampe (GDL), mit einer Spannungs- und/oder Stommeßeinrichtung (U,I) in dem Lampenkreis und mit einem Vergleicher (V), der zum einen mit der Spannungs- und/oder Strommeßeinrichtung (U,I) und zum anderen mit dem Wechselspannungserzeuger (W) verbunden ist, dadurch gekennzeichnet, daß eine Leistungsistwertbestimmungseinrichtung (LI) zum einen mit der Stommeßeinrichtung (I) und der Spannungsmeßeinrichtung (U) und zum anderen mit dem Vergleicher (V) verbunden ist, daß eine zeitgesteuerte Leistungssollwertbestimmungseinrichtung (LS) zum einen über eine Statusbestimmungseinrichtung (ST) mit der Strommeßeinrichtung (I) und zum anderen mit dem Vergleicher (V) verbunden ist und daß die Leistungssollwertbestimmungseinrichtung (LS) mindestens zwei Zeitglieder aufweist.

11. Einrichtung nach Anspruch 10, dadurch gekennzeichnet, daß ein erstes Zeitglied die Ausschaltzeiten der Hochdruckgasentladungslampe (GDL) mißt.

12. Einrichtung nach Anspruch 11, dadurch gekennzeichnet, daß ein zweites Zeitglied die Zeitdauer der letzten Einschaltzeiten der Hochdruckgasentladungslampe mißt.

13. Einrichtung nach Anspruch 12, dadurch gekennzeichnet, daß die Leistungssollwertbestimmungseinrichtung (LS) über ein Kennlinienfeld in Abhängigkeit von den gemessenen Ein- und Ausschaltzeiten einen Leistungssollwert unter Berücksichtigung des maximalen Lampenanlaufstroms bestimmt.

14. Einrichtung nach Anspruch 10, dadurch gekennzeichnet, daß die Leistungssollwertbestimmungseinrichtung (LS) einen ersten Kondensator (C1) beschaltet mit Sperrgliedern und/oder Widerständen aufweist, der in Abhängigkeit von den Ausschaltzeiten und der Zeitdauer der letzten Einschaltzeiten der Hochdruckgasentladungslampe (GDL) die Höhe der Zusatzleistung zur Betriebsleistung bestimmt und daß die Leistungssollwertbestimmungseinrichtung (LS) einen zweiten Kondensator (C2) beschaltet mit Sperrgliedern und/oder Widerständen aufweist, der in Abhängigkeit von den Ausschaltzeiten und der Zeitdauer der letzten Einschaltzeiten die Zeitdauer des Wirksamwerdens der Zusatzleistung zur Betriebsleistung bestimmt.

15. Einrichtung nach Anspruch 14, dadurch gekennzeichnet, daß der Spannungsverlauf am ersten Kondensator (C1) die Abnahmefunktion der Zusatzleistung nach dem Ablauf der Zeitdauer für das Wirksamwerden der Zusatzleistung bestimmt.

16. Einrichtung nach Anspruch 15, dadurch gekennzeichnet, daß die Statusbestimmungseinrichtung (ST) mit dem Steuereingang (SE) einer Schalteinrichtung (S) verbunden ist, deren Schaltstrecke entweder einen ersten Referenzspannungsanschluß (UR1) oder Masse über einen ersten Widerstand (R1) mit dem nichtinvertierenden Eingang eines Komparators (K) verbinden kann, daß der nichtinvertierende Eingang des Komparators (K) zudem über den zweiten Kondensator (C2) mit Masse verbunden ist, daß der invertierende Eingang des Komparators (K) mit einem zweiten Referenzspannungsanschluß (UR2) verbunden ist, daß der Ausgang des Komparators (K) einen Schalter (SA) ansteuert, dessen Schaltstrecke über ein Sperrglied (D) den ersten Referenzspannungsanschluß (UR1) zum einen über einen neunten Widerstand (R9) mit dem nichtinvertierenden Eingang eines idealen Spannungsfolgers (SF) und zum anderen über einen achten Widerstand (R8) mit Masse verbinden kann, daß der nichtinvertierende Eingang des Spannungsfolgers (SF) über einen ersten Kondensator (C1) mit Masse verbunden ist, daß der Ausgang des Spannungsfolgers (SF) zum einen mit dem invertierenden Eingang des Spannungsfolgers (SF) und zum anderen über einen vierzehnten Widerstand (R14) mit dem invertierenden Eingang eines Subtrahierers (SH) verbunden ist, daß der nichtinvertierende Eingang des Subtrahierers (SH) mit einem dritten Referenzspannungsanschluß (UR3) verbunden ist, und daß der Ausgang des Subtrahierers (SH) zum einen über einen dreizehnten Widerstand (R13) mit dem invertierenden Eingang des Subtrahierers (SH) und zum anderen mit dem Ausgang (A) verbunden ist, der an den Vergleicher (V) angeschlossen ist.

## Claims

1. Method of starting a high-pressure gas discharge lamp (GDL) in motor vehicles, producing from a direct current an alternate current which is fed to an ignition unit (Z) for igniting a high-pressure gas discharge lamp, measuring a lamp voltage and/or a lamp current, the actual value of the lamp current (I) and/or the lamp voltage (U) being compared with a nominal value, and after ignition of the high-pressure gas discharge lamp (GDL) an additional output (ZL) being fed for a specified period into the operational output of the high-pressure gas discharge lamp (GDL) by way of changing the alternate voltage, which is on the one hand defined by a maximum admissible lamp current and on the other hand reduced on expiration of the specified period of time, **characterized in that** a status value is established which assumes the values "lamp on" and "lamp off", that the actual value is an actual lamp output value, that the nominal value is a nominal lamp output value, that the additional output (ZL) to be generated after ignition increases with increasing switch-off time and with decreasing duration of the last switch-on period, and that the duration (T) of becoming effective of the additional output (ZL) increases with increasing switch-off time and decreasing duration of the last switch-on period of the high-pressure gas discharge lamp.

2. Method according to claim 1, **characterized in that** the status values "lamp on" and "lamp off" are established in dependence of specified values of a voltage which corresponds with the lamp current.

3. Method according to claim 2, **characterized in that** the actual lamp output value is established by multiplication of lamp voltage with a voltage corresponding with the lamp current.

4. Method according to claim 3, **characterized in that** that a maximum additional output (ZLM) is offered.

5. Method according to claim 4, **characterized in that** a maximum duration (TM) of becoming effective of the additional output is offered.

6. Method according to claim 5, **characterized in that** for the duration (T) of the additional output (ZL) becoming effective the additional output (ZL) takes up a virtually constant value.

7. Method according to claim 6, **characterized in that** after expiration of the period (T) of the additional output (ZL) becoming effective the additional output is continuously reduced.

8. Method according to claim 7, **characterized in that** the nominal output value for the additional output (ZL) is established by means of a digitally or analogously stored family of characteristics.

9. Method according to claim 7, **characterized in that** the nominal output value for the additional output (ZL) is established by means of exponential functions with at least two different time constants, arrived at by way of RC elements.

10. Device for starting a high-pressure gas discharge lamp (GDL) in motor vehicles with a direct current source, which is connected to an alternate current generator (W), comprising an ignition unit (Z) between the alternate current generator (W) and the high-pressure gas discharge lamp (GDL), a voltage and/or current measuring device (U, I) in the lamp circuit, and a comparator (V) which is connected on the one hand to the voltage and/or current measuring device (U, I) and on the other hand to the alternate voltage generator (W), **characterized in that** a device for determining the actual output value (LI) is connected on the one hand to the current measuring device (I) and the voltage measuring device (U) and on the other hand to the comparator (V), that a time-controlled device for determining the nominal output value (LS) is connected on the one hand via a status determining device (ST) to the current measuring device (I) and on the other hand to the comparator (V), and that the device for determining the nominal output value (LS) comprises at least two time elements.

11. Device according to claim 10, **characterized in that** a first timing element measures the switch-off periods of the high-pressure gas discharge lamp (GDL).

12. Device according to claim 11, **characterized in that** a second timing element measures the duration of the last switch-on periods of the high-pressure gas discharge lamp.

13. Device according to claim 12, **characterized in that** the device for determining the nominal output value (LS) determines, via the family of characteristics and in dependence of the measured switch-on and switch-off periods, a nominal output value whilst taking into consideration the maximum start-up current for the lamp.

14. Device according to claim 10, **characterized in that** the device for determining the nominal output value (LS) switches a first capacitor (C1) with barrier elements and/or resistances, which determines, in dependence of the switch-off periods and the duration of the last switch-on periods of the high-pressure gas discharge lamp (GDL), the volume of additional output into the operating output, and that the device for determining the nominal output value (LS) operates a second capacitor (C2) with barrier elements and/or resistances which determines, in dependence of the switch-off periods and the duration of the last switch-on periods, the duration of the additional output becoming effective relative to the operating output.

15. Device according to claim 14, **characterized in that** the voltage behaviour on the first capacitor (C1) determines the pick-off function of the additional output after expiration of the period required for the additional output to become effective.

16. Device according to claim 15, **characterized in that** the status determining device (ST) is connected to the control input (SE) of a circuit (S), the circuitry of which can connect either a first reference voltage connection (UR1) or ground via a first resistor (R1) to the non-inverting input of a comparator (K), that furthermore the non-inverting input of the comparator (K) is connected to ground via a second capacitor (C2), that the inverting input of the comparator (K) is connected to a second reference current connection (UR2), that the output of the comparator (K) controls a switch (SA), the circuitry of which can connect via a barrier element (D) the first reference current connection (UR1) on the one hand via a nineth resistor (R9) to the non-inverting input of an ideal voltage follower (SF) and on the other hand via an eighth resistor (R8) to ground, that the non-inverting input of the voltage follower (SF) is connected via a first capacitor (C1) to ground, that the output of the current follower (SF) is connected on the one hand to the inverting input of the voltage follower (SF) and on the other hand via a fourteenth resistor (R14) to the inverting input of a subtracter (SH), that the non-inverting input of the subtracter (SH) is connected to a third reference voltage connection (UR3), and that the output of the subtracter (SH) is connected on the one hand via a thirteenth resistor (R13) to the inverting input of the subtracter (SH) and on the other hand to the output (A) which is connected to the comparator (V).

## Revendications

1. Procédé pour l'allumage d'une lampe à décharge sous haute pression (GDL) dans des véhicules automobiles, dans lequel on produit un courant alternatif à partir d'un courant continu, le courant alternatif est fourni à un dispositif d'allumage (Z) pour allumer une lampe à décharge sous haute pression (GDL), on mesure une tension de lampe et/ou un courant de lampe, on compare la valeur réelle du courant de lampe (I) et/ou de la tension de lampe (U) avec une valeur de consigne et on alimente, après l'allumage de la lampe à décharge sous haute pression (GDL) et pour une durée prédéterminée, une puissance additionnelle (ZL) à la puissance de service de la lampe à décharge sous haute pression (GDL) au moyen d'une variation du courant alternatif, qui est limitée d'une part par le courant de lampe maximal admissible et est réduite d'autre part après écoulement de la durée prédéterminée, caractérisé en ce qu'on forme une valeur d'état, qui prend les valeurs "lampe allumée" et "lampe éteinte", en ce que la valeur réelle est une valeur réelle pour la puissance de la lampe, en ce que la valeur de consigne est une valeur de consigne pour la puissance de la lampe, en ce que la puissance additionnelle (ZL) à générer après l'allumage aug-

EP 0 459 126 B1

mente avec une augmentation de la durée d'interruption de circuit et avec une diminution de la durée de la dernière période de mise en circuit et en ce que la durée (T) de montée en charge de la puissance additionnelle (ZL) augmente avec une augmentation de la durée d'interruption de circuit et avec une diminution de la durée de la dernière période de mise en circuit de la lampe à décharge sous haute pression.

2. Procédé selon la revendication 1, caractérisé en ce que les valeurs d'état "lampe allumée" et "lampe éteinte" sont formées en fonction des valeurs prédéterminées d'une tension correspondant au courant de lampe.

3. Procédé selon la revendication 2, caractérisé en ce que la valeur réelle pour la puissance de la lampe est formée par multiplication de la tension de lampe avec une tension correspondant au courant de lampe.

4. Procédé selon la revendication 3, caractérisé en ce qu'une puissance additionnelle maximale (ZLM) est prédéterminée.

5. Procédé selon la revendication 4, caractérisé en ce qu'une durée maximale (TM) de montée en charge de la puissance additionnelle (ZL) est prédéterminée.

6. Procédé selon la revendication 5, caractérisé en ce que sur la durée (T) de montée en charge de la puissance additionnelle (ZL) la puissance additionnelle (ZL) prend une valeur approximativement constante.

7. Procédé selon la revendication 6, caractérisé en ce qu'après l'écoulement de la durée (T) de montée en charge de la puissance additionnelle (ZL), la puissance additionnelle est réduite en continu.

8. Procédé selon la revendication 7, caractérisé en ce que la formation de la valeur de consigne de puissance pour la puissance additionnelle (ZL) s'effectue au moyen de champs de courbes caractéristiques stockés de manière numérique ou analogique.

9. Procédé selon la revendication 7, caractérisé en ce que la formation de la valeur de consigne de puissance pour la puissance additionnelle (ZL) s'effectue au moyen de fonctions exponentielles formées par des circuits RC avec au moins deux constantes de temps différentes.

10. Dispositif pour l'allumage d'une lampe à décharge sous haute pression (GDL) dans des véhicules automobiles avec une source de courant continu, qui est connectée à un générateur de courant alternatif (W), avec un dispositif d'allumage (Z) entre le générateur de courant alternatif (W) et la lampe à décharge sous haute pression (GDL), avec un dispositif de mesure de courant et/ou de tension (I, U) dans le circuit de lampe et avec un comparateur (V), qui est relié d'une part avec le dispositif de mesure du courant et/ou tension (I, U) et d'autre part avec le générateur de courant alternatif (W), caractérisé en ce qu'un dispositif de mesure de la valeur réelle de puissance (LI) est relié d'une part avec le dispositif de mesure du courant (I) et le dispositif de mesure de la tension (U) et d'autre part avec le comparateur (V), en ce qu'un dispositif de détermination de la valeur de consigne de puissance (LS) commandé en fonction du temps est relié d'une part via un dispositif de détermination de l'état (ST) avec le dispositif de mesure du courant (I) et d'autre part avec le comparateur (V) et en ce que le dispositif de détermination de la valeur de consigne de puissance (LS) présente au moins deux circuits de temporisation.

11. Dispositif selon la revendication 10, caractérisé en ce qu'un premier circuit de temporisation mesure les durées d'interruption du circuit de la lampe à décharge sous haute pression (GDL).

12. Dispositif selon la revendication 11, caractérisé en ce qu'un second circuit de temporisation mesure la durée des dernières périodes de mise en circuit de la lampe à décharge sous haute pression.

13. Dispositif selon la revendication 12, caractérisé en ce que le dispositif de détermination de la valeur de consigne de puissance (LS) fixe au moyen d'un champ de courbes caractéristiques, en fonction des durées de mise en circuit et de coupure de circuit mesurées, une valeur de consigne de puissance en considération du courant d'amorçage maximum de la lampe.

14. Dispositif selon la revendication 10, caractérisé en ce que le dispositif de détermination de la valeur de consigne de puissance (LS) présente un premier condensateur (C1) branché avec des composants de blocage et/ou des résistances, ce condensateur fixant, en fonction des durées d'interruption du circuit et de la durée des dernières périodes de mise en circuit de la lampe à décharge sous haute pression (GDL),

11

l'amplitude de la puissance additionnelle à la puissance de service, et en ce que le dispositif de détermination de la valeur de consigne de puissance (LS) présente un deuxième condensateur (C2) branché avec des composants de blocage et/ou des résistances, ce condensateur définissant, en fonction des durées d'interruption du circuit et de la durée des dernières périodes de mise en circuit, la durée de montée en charge de la puissance additionnelle à la puissance de service.

15. Dispositif selon la revendication 14, caractérisé en ce que la courbe de tension au premier condensateur (C1) définit la fonction de diminution de la puissance additionnelle après l'écoulement de la durée pour la montée en charge de la puissance additionnelle.

16. Dispositif selon la revendication 15, caractérisé en ce que le dispositif de détermination de l'état (ST) est relié avec l'entrée de commande (SE) d'un dispositif de commutation (S), dont le circuit de commutation peut connecter soit une première borne de tension de référence (UR1) soit la masse via une première résistance (R1) avec l'entrée non inversée d'un comparateur (K), en ce que l'entrée non inversée du comparateur (K) est de plus reliée via le deuxième condensateur (C2) avec la masse, en ce que l'entrée inversée du comparateur (K) est reliée avec une deuxième borne de tension de référence (UR2), en ce que la sortie du comparateur (K) pilote un commutateur (SA), dont le circuit de commutation peut connecter via un composant de blocage (D) la première borne de tension de référence (UR1), d'une part via une neuvième résistance (R9) avec l'entrée non inversée d'un circuit de poursuite de tension idéal (SF), et d'autre part via une huitième résistance (R8) avec la masse, en ce que l'entrée non inversée du circuit de poursuite de tension (SF) est reliée via un premier condensateur (C1) avec la masse, en ce que la sortie du circuit de poursuite de tension (SF) est reliée d'une part avec l'entrée inversée du circuit de poursuite de tension (SF) et d'autre part via une quatorzième résistance (R14) avec l'entrée inversée d'un soustracteur (SH), en ce que l'entrée non inversée du soustracteur (SH) est reliée avec une troisième borne de tension de référence (UR3), et en ce que la sortie du soustracteur (SH) est reliée d'une part via une treizième résistance (R13) avec l'entrée inversée du soustracteur (SH) et d'autre part avec la sortie (A), qui est raccordée au comparateur (V).

FIG 1

FIG 2

EP 0 459 126 B1

EP 0 459 126 B1

FIG 3